# EUROPEAN PATENT SPECIFICATION

(11) **EP 0 953 829 B1**
(45) Date of publication and mention of the grant of the patent: **07.03.2007**
(21) Application number: 99201330.0
(22) Date of filing: 29.04.1999
(51) Int. Cl.: G01H 1/00, A01J 5/007

(54) **A method of acoustically monitoring the course of a milking process**
Verfahren zur akustischen Überwachung eines Melkprozesses
Méthode pour la surveillance acoustique du déroulement d'un processus de traite

(30) Priority: 01.05.1998 NL 1009052; 21.10.1998 NL 1010369
(43) Date of publication of application: 03.11.1999
(60) Divisional application: 06076811.6
(73) Proprietor: MAASLAND N.V., 3147 PA Maassluis (NL)
(72) Inventor: Oort, Dick Marius, 3142 LN Maassluis (NL); van den Berg, Karel, 2971 BR Bleskengraaf (NL)
(74) Representative: Corten, Maurice Jean F.M.

(56) References cited:
- EP-A- 0 572 349
- DE-A- 3 406 356
- US-A- 4 011 838
- US-A- 4 609 994

## Description

The invention relates to a method of monitoring a milking process as defined in claim 1.

The above-mentioned method can by measuring by means of a piezoelectric transducer, in part of the milk line system or in a teat cup, the amplitude and/or the intensity value of the sound that is produced by the air flow in the teat cup and/or in the milk line system when said teat cup is not connected and a milk vacuum has been applied in the milk line system, which amplitude and/or intensity value are/is recorded as a reference value and/or reference pattern for the purpose of deducing therefrom whether or not a teat cup has been correctly connected to a teat Furthermore it is possible to determine, on the basis of this threshold value, whether a teat cup is disconnected abruptly from a teat or has not been connected quite property to the teat, as in the first case during the abrupt disconnection there is immediately obtained a high amplitude and/or intensity value which is approximately comparable to the threshold value, whereas in the second case there can indeed be observed an increase in amplitude which, however, is not as high as the threshold value.

US-A-4 011 838 discloses a milking machine with a flow rate sensor.

The invention will now be explained in further detail with reference to the accompanying drawings in which:
Figure 1 shows a teat cup with part of a milk line system in which the sensor according to the invention is Included;
Figure 2 is a cross-section of the sensor according to Figure 1, and
Figure 3 is a plan view according to the arrows III - III in Figure 2.

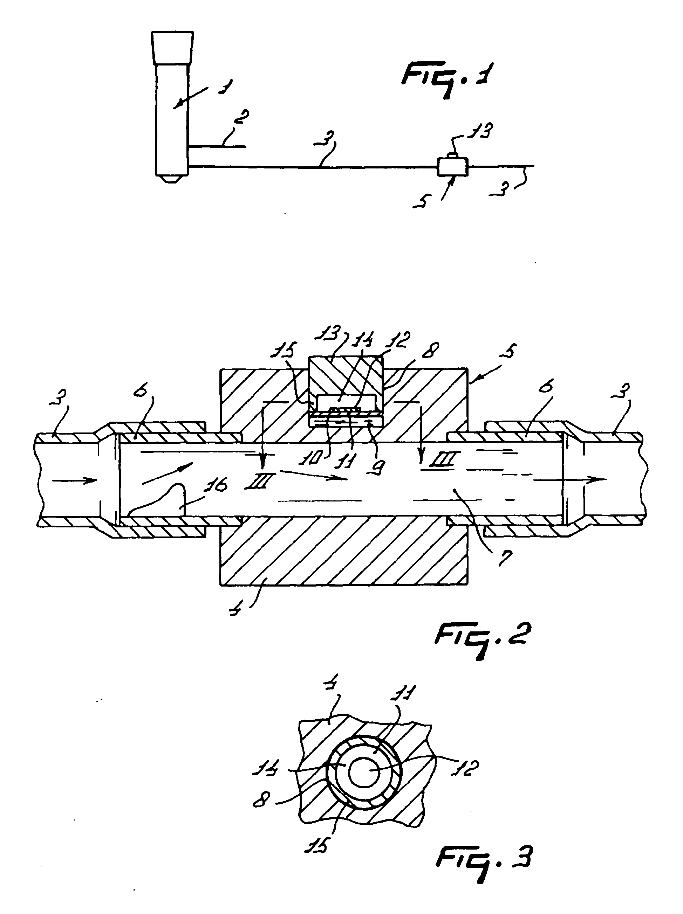

Figure 1 shows a teat cup 1 that is provided with a pulse tube 2 and a milk tube 3. In the milk tube 3 there is included a sensor 4 for measuring amplitude difference and/or intensity value of sound. The teat cup 1 may constitute part of an automatic milking implement comprising a milking robot for automatically connecting teat cups to the teats of an animal to be milked.

Figure 2 is a cross-section of the sensor 4 according to Figure 1. The sensor 4 comprises a housing 5 which is made of a material having a strongly absorbing capacity for sound and/or vibrations. On both sides of the housing 5 there are disposed two nipples 6 to which the milk tube 3 is connected. In the housing 5 there is further disposed a duct 7 through which the milk and/or cleaning liquid and/or air can flow. As shown in Figures 2 and 3, in the housing 5 there is further provided a cylindrical cavity 8 extending as far as near the duct 7. A liquid or viscous layer 9 having a good conductivity for sound and/or vibrations is disposed in the lower side of the cylindrical housing 8. This layer 9 may consist e.g. of vaseline. On the layer 9 there is provided a piezo-sensor 10 comprising a round brass plate 11 and a piezoelectric transducer 12 disposed thereon. In this case the piezoelectric transducer 12 is constituted by a crystal. The cylindrical cavity 8 is further closed by means of a closing element 13 which, in the present embodiment, is designed as a pressure cap. Near its lower side the pressure cap 13 is provided with a recess 14 having such dimensions that the piezoelectric transducer 12 is disposed in an air chamber. As shown in Figures 2 and 3, near its lower side the closing cap 13 comprises a ring-shaped pressure portion 15 by means of which the round brass plate 11 can be pressed on the layer 9, in such a manner that there is a good contact between the layer 9 and the round brass plate 11.

In one of the nipples 6 there is further disposed a flow disturbing element 16 by means of which the laminar flow across at least part of the duct 7 is caused to whirl. In the present embodiment the flow disturbing element 16 comprises a (non-shown) temperature and/or conductivity sensor.

## Claims

1. A method of acoustically monitoring a milking process which produces sounds which are produced by the flow of milk through or from a teat cup used in said milking process, the method comprising continually measuring during said milking process amplitude differences and/or intensity values of the sound and comparing the results of said measurements with one or more predetermined threshold values, reference values or reference patterns and drawing, on the basis thereof, one or more conclusions consisting of conclusions in relation to the progress of the milking process, condusions on the course of the milking process, and conclusions on the presence of irregularities detected in the course of the milking process.

## Patentansprüche

1. Verfahren zum akustischen Überwachen eines Melkvorganges, der Töne erzeugt, die durch das Strömen von Milch durch oder aus einem bei diesem Melkvorgang verwendeten Zitzenbecher erzeugt werden, wobei das Verfahren das ständige Messen während des Melkvorganges von Amplitudendifferenzen und/oder Intensitätswerten des Schalls und das Vergleichen der Ergebnisse dieser Messungen mit einem oder mehreren vorgegebenen Grenzwerten, Bezugswerten oder Bezugsmustern sowie ausgehend davon das Ziehen einer oder mehrerer Schlußfolgerungen umfaßt, wobei es sich um Schlußfolgerungen bezüglich des Fortschreitens des Melkvorganges, Schlußfolgerungen bezüglich des Verlaufes des Melkvorganges und Schlußfolgerungen bezüglich des Auftretens von Unregelmäßigkeiten handelt, die während des Verlaufes des Melkvorganges detektiert werden.

## Revendications

1. Procédé consistant à surveiller de façon acoustique un processus de traite qui produit des sons qui sont produits par l'écoulement de lait à travers ou à partir d'un gobelet trayeur utilisé dans ledit processus de traite, le procédé comprenant les étapes consistant à mesurer en continu au cours dudit processus de traite des différences d'amplitude et/ou valeurs d'intensité du son et comparer les résultats desdites mesures à une ou plusieurs valeurs de seuil, valeurs de référence ou configurations de référence et tirer, sur la base de ceux-ci, une ou plusieurs conclusions constituées de conclusions par rapport au progrès du processus de traite, conclusions concernant le cours du processus de traite, et conclusions concernant la présence d'irrégularités détectées au cours du processus de traite.
